# EUROPEAN PATENT SPECIFICATION

(11) **EP 2 696 108 B1**
(45) Date of publication and mention of the grant of the patent: **28.11.2018**
(21) Application number: 12195004.2
(22) Date of filing: 30.11.2012
(51) Int. Cl.: F16H 61/32, F16H 63/18

(54) **Automatic transmission apparatus and straddle-type vehicle equipped with the apparatus**
Automatikgetriebevorrichtung und mit der Vorrichtung ausgestattetes Sattelfahrzeug
Appareil de transmission automatique et véhicule de type à selle équipé de l'appareil

(30) Priority: 10.08.2012 JP 2012178442
(43) Date of publication of application: 12.02.2014
(73) Proprietor: Yamaha Hatsudoki Kabushiki Kaisha, Iwata-shi, Shizuoka 438-8501 (JP)
(72) Inventor: Oohata, Shinobu, Iwata-shi, Shizuoka 438-8501 (JP)
(74) Representative: Grünecker Patent- und Rechtsanwälte PartG mbB

(56) References cited:
- US-A- 6 095 004
- US-A1- 2010 241 324

## Description

The present invention relates to an automatic transmission apparatus, a straddle-type vehicle equipped the automatic transmission apparatus and a method for controlling an automatic transmission apparatus.

Conventionally, straddle-type vehicles equipped with a multi-geared type transmission mechanism having a dog clutch are known. In recent years, straddle-type vehicles configured to perform gear shifting of the transmission mechanism using an actuator such as an electric motor have also become known. These types of straddle-type vehicles can eliminate the shifting operations by the rider and reduce the burden on the rider resulting from the shifting operations.

The multi-geared type transmission mechanism having a dog clutch is provided with a movable gear that can be moved in axial directions of a main shaft by a shift fork and a stationary gear that is immovable in the axial directions of the main shaft. Each of the movable gear and the stationary gear has an engaging portion comprising, for example, a protrusion or a recess. When the engaging portion of the movable gear and the engaging portion of the stationary gear engage with each other, the movable gear and the stationary gear come into mesh with each other, and the movable gear and the stationary gear rotate integrally with each other. Upon gear shifting, the movable gear moves in one axial direction of the main shaft. In association with this movement, the engaging portion of the movable gear separates from the engaging portion of the stationary gear, which has engaged with the engaging portion of the movable gear, and another engaging portion of the movable gear comes into engagement with another engaging portion of the stationary gear. In the following description, the separation of an engaging portion (e.g., a protrusion) of the movable gear from an engaging portion (e.g., a recess) of the stationary gear is referred to as "dog disengagement". On the other hand, the engaging of an engaging portion of the movable gear with an engaging portion of the stationary gear is referred to as "dog engagement".

At the time of the dog engagement, it is possible that clunking noise may occur. For example, the clunking noise occurs when the tip of the engaging portion of the movable gear hits the bottom part of the engaging portion of the stationary gear. When the moving speed of the movable gear is higher, this clunking noise tends to become louder. In order to reduce the clunking noise, it is conceivable to control the actuator in such a manner as to decrease the moving speed of the movable gear. However, merely decreasing the moving speed of the movable gear may make the time required to accomplish the gear shifting operation rather longer.

JP 2010-078117 A discloses a technique for suppressing the clunking noise in a transmission control apparatus provided with an electric motor for rotating a shift drum. In the just-mentioned transmission control apparatus, the shift drum is rotated by duty-controlling the electric motor to perform the dog disengagement and the dog engagement. In the just-mentioned transmission control apparatus, before the completion of the dog engagement, the duty ratio is set to 0% (i.e., the motor output is set to zero) so that the dog engagement is completed using only the rotary inertia of the shift drum.

The engaging portion of the movable gear and the engaging portion of the stationary gear are engaged with each other before the gear shifting, so there is an engaging force between the two engaging portions. In the dog disengagement, the movable gear needs to be shifted by an actuator against the engaging force. When the engaging force is great, a great force is applied to the movable gear. However, once the engagement between the engaging portion of the movable gear and the engaging portion of the stationary gear is released, the movable gear is allowed to move vigorously and have a great inertial force. For this reason, it is difficult to sufficiently reduce the speed of the movable gear by merely setting the motor output to zero before the completion of the dog engagement as in the case of the above-described conventional transmission control apparatus, so it is difficult to reduce the clunking noise effectively. Moreover, with the above-described conventional transmission control apparatus, it is difficult to reduce the clunking noise sufficiently in the transmission mechanism that has a great rotary inertia.

The document US 6,095,004 shows an automatic transmission apparatus according to the preamble of claim 1 (apparatus) and claim 11 (method).

It is an object of the present invention to provide an automatic transmission apparatus, a straddle-type vehicle equipped the automatic transmission apparatus, and a method for controlling an automatic transmission apparatus in which a multi-speed type transmission mechanism having a dog clutch is driven by an actuator, wherein it is prevented that the time required to accomplish the gear shifting operation is becoming longer, and at the same time to reduce the clunking noise of the dog clutch more effectively.

According to the present invention said object is solved by an automatic transmission apparatus having the features of independent claim 1, a straddle-type vehicle equipped with such an automatic transmission apparatus and/or a method for controlling an automatic transmission apparatus having the features of independent claim 11. Preferred embodiments are laid down in the dependent claims. Accordingly, an automatic transmission apparatus comprises: a multi-speed type transmission mechanism, having a plurality of transmission gears to engage with each other via a dog clutch and changing a combination of the engaging transmission gears in association with rotation of a shift drum; an electric actuator for rotating the shift drum; and a control device for controlling the actuator by applying a voltage thereto. The control device has a braking control unit for executing a control process at the time of a gear shifting operation of releasing a pair of transmission gears from engagement with each other and causing another pair of transmission gears to engage with each other, the control process including applying one of positive and negative voltages to the actuator to release the pair of transmission gears from engagement with each other and thereafter applying the other one of the positive and negative voltages to the actuator before the other pair of transmission gears finish engaging with each other.

Accordingly, a significant speed reduction effect for the shift drum can be obtained by applying an opposite voltage to the actuator immediately before the completion of the dog engagement (for example, by applying a negative voltage when a positive voltage has been applied at the time of the dog disengagement). As a result, the clunking noise at the time of the dog engagement can be reduced, while at the same time an increase in the gear shifting time due to the speed reduction can be prevented. Moreover, when the transmission gear is moved with a great inertial force at the time of the dog engagement, a sufficient braking force can be provided for the transmission gear. As a result, the clunking noise at the time of the dog engagement can be reduced.

In another embodiment, the automatic transmission apparatus further comprises a speed detecting device for directly or indirectly detecting a moving speed of the transmission gears. The braking control unit determines an application time or a voltage value of the other one of the voltages based on the moving speed of the transmission gears.

By determining the voltage application time or the voltage value according to the moving speed of the transmission gears in this way, a braking force can be adjusted. In addition, the actuator can be decelerated quickly by applying the braking force immediately before the completion of the dog engagement. Therefore, both the prevention of an increase in the gear shifting time resulting from the speed reduction and the reduction of the clunking noise at the time of the dog engagement can be achieved at a high level.

In another embodiment, the speed detecting device has a detecting unit for detecting the operating speed of the actuator. The speed detecting device indirectly detects the moving speed of the transmission gear from the operating speed of the actuator.

It is easier to indirectly detect the moving speed of the transmission gears based on the operating speed of the actuator than to directly detect the moving speed of the transmission gears. Thus, the moving speed of the transmission gears can be detected easily.

In another embodiment, the speed detecting device has a detecting unit for detecting the rotational speed of the shift drum. The speed detecting device indirectly detects the moving speed of the transmission gear from the rotational speed of the shift drum.

It is easier to indirectly detect the moving speed of the transmission gears based on the rotational speed of the shift drum than to directly detect the moving speed of the transmission gears. Thus, the moving speed of the transmission gears can be detected easily. Moreover, the shift drum is located closer to the transmission gears than is the actuator. Therefore, the moving speed of the transmission gears can be detected more accurately by detecting the rotational speed of the shift drum than by detecting the operating speed of the actuator.

In another embodiment, the transmission gears are fitted to a main shaft. The transmission gears have engaging portions each comprising a protrusion protruding in an axial direction of the main shaft or a recess recessed in an axial direction of the main shaft. The transmission gears are brought into engagement with each other by overlapping the engaging portions with each other with respect to the axial direction. The automatic transmission apparatus further comprises a detecting device for directly or indirectly detecting an overlap of the engaging portions with each other with respect to the axial direction. The braking control unit applies the other voltage to the actuator if the detecting device detects the overlap.

With such a configuration, the braking can be effected after the engaging portions of the transmission gears have overlapped with each other (i.e., in the middle of the dog engagement). This makes it possible to prevent the braking from starting too early. As a result, the clunking noise at the time of the dog engagement can be reduced more suitably while at the same time an increase in the gear shifting time can be prevented.

In another embodiment, the detecting device has a detecting unit for detecting an operating position of the actuator. The detecting device indirectly detects the overlap of the engaging portions with each other from the operating position of the actuator.

It is easier to indirectly detect the overlap of the engaging portions with each other based on the operating position of the actuator than to directly detect the overlap of the engaging portions with each other. Thus, the overlap of the engaging portions with each other can be detected easily.

In another embodiment, the detecting device has a detecting unit for detecting a rotational position of the shift drum. The detecting device indirectly detects the overlap of the engaging portions with each other from the rotational position of the shift drum.

It is easier to indirectly detect the overlap of the engaging portions with each other based on the rotational position of the shift drum than to directly detect the overlap of the engaging portions with each other. Thus, the overlap of the engaging portions with each other can be detected easily. Moreover, the shift drum is located closer to the transmission gears than is the actuator. Therefore, the overlap of the engaging portions with each other can be detected more accurately by detecting the rotational position of the shift drum than by detecting the operating position of the actuator.

In another embodiment, the detecting device has a detecting unit for detecting an elapsed time from a start of operating the actuator. The detecting device indirectly detects the overlap of the engaging portions with each other from the elapsed time.

It is easier to indirectly detect the overlap of the engaging portions with each other based on the elapsed time from the start of operating the actuator than to directly detect the overlap of the engaging portions with each other. Thus, the overlap of the engaging portions with each other can be detected easily.

In another embodiment, the automatic transmission apparatus further comprises a speed detecting device for directly or indirectly detecting a moving speed of the transmission gears. The control device has a normal control unit for executing a control process including applying one of positive and negative voltages to the actuator to release the pair of transmission gears from engagement with each other and thereafter keeping applying the one of positive and negative voltages to the actuator until the other pair of transmission gears finishes engaging with each other. The control device executes the control process by the braking control unit if the moving speed of the transmission gear is equal to or higher than a predetermined value before the other pair of transmission gears finishes engaging with each other, and executes the control process by the normal control unit if the moving speed is less than the predetermined value.

Such a configuration makes it possible to appropriately use whether or not the braking is effected according to the moving speed of the transmission gears. When the moving speed of the transmission gears is high, the transmission gears can be sufficiently decelerated before the engagement of the transmission gears with each other is completed. As a result, the clunking noise at the time of the dog engagement can be reduced, while at the same time an increase in the gear shifting time can be prevented. On the other hand, when the moving speed of the transmission gears is low, large clunking noise does not occur at the time of the dog engagement. For this reason, the braking on the transmission gears can be eliminated, whereby an increase in the gear shifting time can be avoided.

In another preferable embodiment, a straddle-type vehicle equipped with an automatic transmission apparatus having the structure as described above is provided.

This makes it possible to provide a straddle-type vehicle equipped with the above-described automatic transmission apparatus that can prevent the time required to accomplish the gear shifting operation from becoming longer and at the same time to reduce the clunking noise at the time of the dog engagement more effectively.

### ADVANTAGEOUS EFFECTS OF INVENTION

The present invention makes it possible to prevent, in the automatic transmission apparatus in which a multi-speed type transmission mechanism having a dog clutch is driven by an actuator, the time required to accomplish the gear shifting operation from becoming longer, and at the same time to reduce the clunking noise of the dog clutch more effectively.

### BRIEF DESCRIPTION OF DRAWINGS

Fig. 1 is a side view of a motorcycle according to a first embodiment.
Fig. 2 is a cross-sectional view illustrating an internal structure of a power unit according to the first embodiment.
Fig. 3 is a block diagram illustrating main elements of the motorcycle according to the first embodiment.
Fig. 4 is a view schematically illustrating change in rotation angle of a shift actuator, change in rotation angle of a shift drum, as well as dog disengagement and dog engagement of transmission gears.
Fig. 5 schematically shows the positions of the transmission gears at the start of the dog engagement, in the middle of the dog engagement, and immediately before the completion of the dog engagement.
Fig. 6 is a flow chart illustrating the control process of an automatic transmission apparatus according to the first embodiment.
Fig. 7 shows charts showing changes over time of the clutch position, the rotational position of the shift actuator, the position of the transmission gear, and the duty ratio, in one example of the automatic transmission apparatus according to the first embodiment.

### DESCRIPTION OF EMBODIMENTS

Herein below, preferred embodiments will be described. It should be noted that the other matters not specifically mentioned in this description but necessary to implement the invention can be understood as design variations by a skilled person based on the prior art in the technical field. The present invention may be implemented based on the content disclosed herein and the common technical knowledge in the field.

### <FIRST EMBODIMENT>

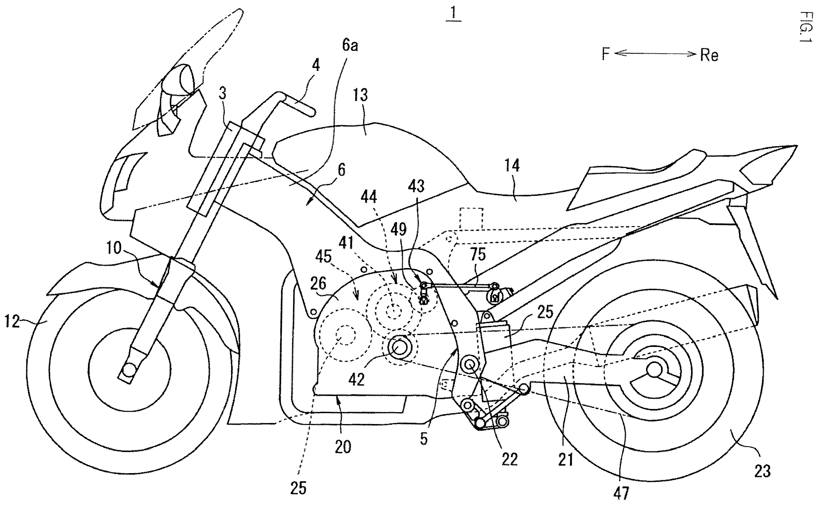

Hereinbelow, a motorcycle equipped with an automatic transmission apparatus according to the present teaching will be described with reference to the drawings. Fig. 1 is a side view illustrating a motorcycle 1. In the present description, the terms "front," "rear," "left," and "right" respectively refer to front, rear, left, and right as defined based on the perspective of the rider seated on a later-described seat 14. Reference characters F and Re in the drawings indicate front and rear, respectively.

The motorcycle 1 is one example of the straddle-type vehicle according to the present embodiment. The motorcycle 1 is what is called an on-road type motorcycle. For example, the straddle-type vehicle according to the present teaching may be any type of motorcycle including an off-road type motorcycle, a sport bike type motorcycle, a scooter type motorcycle, and a moped type motorcycle. The straddle-type vehicle according to the present teaching is not limited to the motorcycle 1. For example, the straddle-type vehicle according to the present teaching may be an ATV, a four-wheeled all-terrain vehicle, and the like.

As illustrated in Fig. 1, the motorcycle 1 has a head pipe 3 and a body frame 6. The body frame 6 has a pair of left and right frame unit 6a extending rearward the head pipe 3. In Fig. 1, only of the frame portions, the frame portion 6a, is depicted. A rear portion of the frame portion 6a extends downward. A rear-arm bracket 5 is connected to a rear portion of the frame portion 6a. A front end portion of a rear arm 21 is connected to the rear-arm bracket 5 via a pivot shaft 22. The rear arm 21 is supported vertically swingably by the pivot shaft 22. A rear wheel 23 is supported at a rear end portion of the rear arm 21.

A fuel tank 13 is disposed above the frame portion 6a. A seat 14 for the rider to be seated is disposed at the rear of the fuel tank 13.

A front fork 10 is supported rotatably by the head pipe 3. A handle bar 4 is provided at the upper end of the front fork 10. A shift switch (not shown) is provided on the handlebar 4. The shift switch comprises a shift-up switch and a shift-down switch. The shift switch can increase or decrease the shift position from between neutral and the top gear position (for example, the 6-th gear position) by manual operation. A front wheel 12 is provided rotatably at a lower end of the front fork 10.

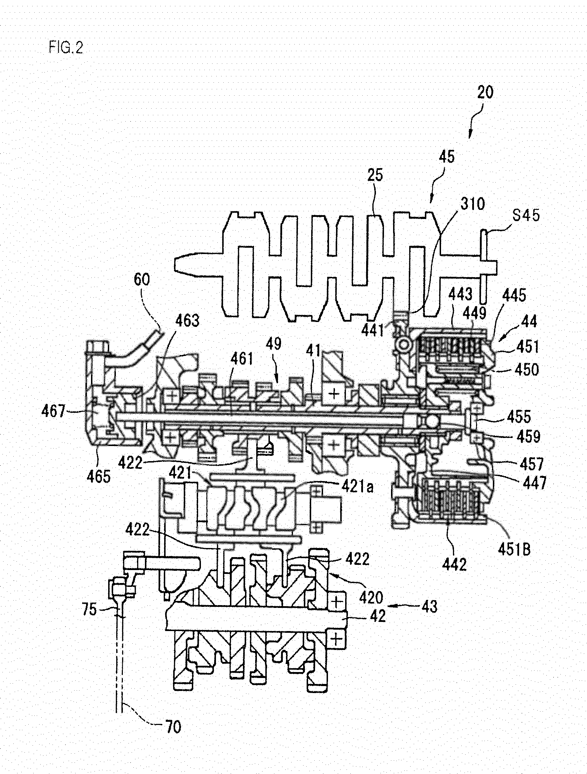

A power unit 20 is mounted on the frame portion 6a and the rear-arm bracket 5 in a suspended manner. Fig. 2 is a cross-sectional view illustrating an internal structure of the power unit 20. As illustrated in Fig. 2, the power unit 20 at least includes an engine 45, a clutch 44, and a transmission mechanism 43. The engine 45, the clutch 44, and the transmission mechanism 43 are assembled integrally with a crankcase 26.

The engine 45 according to the present embodiment is an internal combustion engine that uses gasoline as the fuel. However, the engine 45 is not limited to the internal combustion engine such as a gasoline engine. The engine 45 may be an electric motor engine or the like. The engine 45 may also be one in which a gasoline engine and an electric motor engine are combined. The engine 45 has a crankshaft 25.

The crankshaft 25 is coupled to a main shaft 41 via the clutch 44. The main shaft 41 is arranged parallel to the crankshaft 25. The main shaft 41 is also arranged parallel to a drive shaft 42.

The clutch 44 in the present embodiment is, for example, a multiple friction plate clutch. The clutch 44 has a clutch housing 443 and a clutch boss 447. A plurality of friction plates 445 are provided in the clutch housing 443. A plurality of clutch plates 449 are provided outside the clutch boss 447. Each of the friction plates 445 is fixed to the clutch housing 443 with respect to the direction of rotation of the main shaft 41. This means that the plurality of friction plates 445 rotate together with the clutch housing 443. The plurality of friction plates 445 are displaceable with respect to the axial direction of the main shaft 41. The plurality of friction plates 445 are arrayed along the axial direction of the main shaft 41.

Each of the clutch plates 449 faces an adjacent one of the friction plates 445. Each of the clutch plates 449 is fixed to the clutch boss 447 with respect to the direction of rotation of the main shaft 41. Thereby, the plurality of clutch plates 449 rotate together with the clutch boss 447. The plurality of clutch plates 449 are displaceable with respect to the axial direction of the main shaft 41. In the present embodiment, the plurality of friction plates 445 and the plurality of clutch plates 449 make up a plate assembly 442.

As illustrated in Fig. 2, a pressure plate 451 is disposed vehicle-widthwise outward of the main shaft 41 (i.e., on the right in Fig. 2). The pressure plate 451 is formed in a substantially disc shape. A pressing part 451B projecting toward the plate assembly 442 side is formed in a radially outward portion of the pressure plate 451. The pressing part 451B faces the friction plate 445 that is located on the rightmost side of the plate assembly 442.

The clutch 44 is provided with a spring 450. The spring 450 urges the pressure plate 451 vehicle-widthwise inwardly (i.e., leftward in Fig. 2). In other words, the spring 450 urges the pressure plate 451 in a direction in which the pressing part 451B presses the plate assembly 442.

A center portion of the pressure plate 451 is engaged with one end portion (the right end portion in Fig. 2) of a push rod 455 via a bearing 457. This allows the pressure plate 451 to be rotatable relative to the push rod 455. Note that the main shaft 41 has a tubular shape. The other end portion (the left end portion) of the push rod 455 is accommodated inside the main shaft 41. Inside the main shaft 41, a spherical ball 459 is provided adjacent to the other end portion (the left end portion) of the push rod 455. Further inside the main shaft 41, a push rod 461 is provided adjacently to the ball 459. A left end portion of the push rod 461 protrudes from the main shaft 41. A piston 463 is provided integrally with the left end portion of the push rod 461. The piston 463 is guided by the cylinder main body 465, and it is slidable in the axial directions of the main shaft 41.

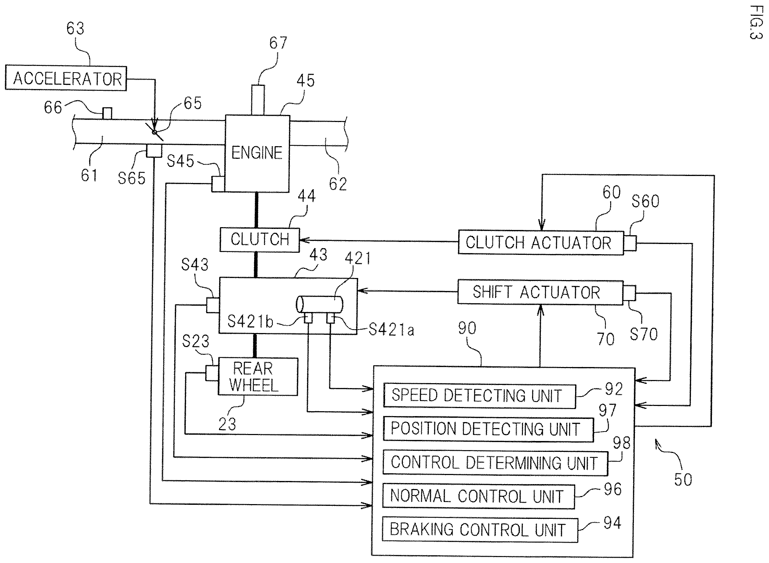

The clutch 44 is driven by a clutch actuator 60 (see Fig. 3). In the present embodiment, the clutch actuator 60 is an electric motor, but the clutch actuator 60 is not limited to the electric motor. The clutch actuator 60 drives the clutch 44 so that the clutch 44 can be engaged and disengaged. When the clutch actuator 60 is actuated, lubrication oil is supplied into a space 467 surrounded by the piston 463 and the cylinder main body 465. When lubrication oil is supplied into the space 467, the piston 463 is pushed and shifted rightward in Fig. 2. Thereby, the piston 463 pushes the pressure plate 451 rightward in Fig. 2, via the push rod 461, the ball 459, the push rod 455, and the bearing 457. When the pressure plate 451 is pushed rightward in Fig. 2, the pressing part 451B of the pressure plate 451 is separated from the friction plates 445, and the clutch 44 is brought into a disengaged state.

At the time when the clutch 44 is engaged, the pressure plate 451 is moved leftward in Fig. 2 by the spring 450. When the pressure plate 451 moves leftward in Fig. 2, the pressing part 451B presses the plate assembly 442 leftward. As a result, the friction plates 445 and the clutch plates 449 in the plate assembly 442 are brought into pressure contact with each other. Thereby, the clutch 44 is brought into an engaged state.

On the other hand, in the disengaged state of the clutch 44, the pressure plate 451 is moved rightward in Fig. 2 by the push rod 451. Then, the pressing part 451B of the pressure plate 451 is separated from the plate assembly 442. In the state in which the pressing part 451B is separated from the plate assembly 442, the friction plates 445 and the clutch plates 449 are not in pressure contact with each other. A slight clearance is formed between each of the friction plates 445 and each of the clutch plates 449. Therefore, a friction force that can transmit a drive force does not occur between the friction plates 445 and the clutch plates 449.

Thus, the pressure plate 451 moves in one of the axial directions of the main shaft 41 or in the other direction according to the magnitude relationship between the drive force of the clutch actuator 60 and the urging force of the spring 450. According to the just-described movement, the clutch 44 is brought into an engaged state or a disengaged state.

A gear 310 is supported integrally on the crankshaft 25 of the engine 45. A gear 441 that meshes with the gear 310 is supported on the main shaft 41. The gear 441 is rotatable relative to the main shaft 41. The gear 441 is provided integrally with, for example, the clutch housing 443. As a result, the torque of the engine 45 is transmitted from the crankshaft 25 via the gear 441 to the clutch housing 443. Also, the torque of the engine 45 is transmitted the clutch housing 443 to the clutch boss 447 by the friction force produced between the plurality of friction plates 445 and the plurality of clutch plates 449. The clutch boss 447 and the main shaft 41 rotate integrally with each other. This means that there is no relative rotation between the clutch boss 447 and the main shaft 41. Therefore, when the clutch 44 is engaged, the torque of the engine 45 is transmitted to the main shaft 41.

The push rod 455 is not limited to such a push rod that pushes the pressure plate 451 rightward in Fig. 2 by a mechanism inserted in the main shaft 41. The push rod 455 may be such a push rod that pulls the pressure plate 451 rightward in Fig. 2 by a mechanism provided vehicle-widthwise outward (i.e., rightward in Fig. 2) of the pressure plate 451.

The clutch 44 may not be a multiple plate clutch but may be a single plate clutch. The clutch 44 may also be provided with a centrifugal weight. In this case, the clutch 44 is engaged/disengaged by actuation of the clutch actuator 60 and the centrifugal force of the centrifugal weight.

Next, the configuration of the transmission mechanism 43 will be described in detail. The transmission mechanism 43 according to the present embodiment is what is called a dog clutch type transmission mechanism, and a multi-speed type transmission mechanism. The transmission mechanism 43 has later-described transmission gears 49 and 420, a shift drum 421, and a shift fork 422.

A plurality of transmission gears 49 are attached to the main shaft 41. On the other hand, a plurality of transmission gears 420 that correspond to the above-mentioned plurality of transmission gears 49 are attached to the drive shaft 42. Each of the transmission gears 49 and each of the transmission gears 420 have an engaging portion comprising a protrusion protruding in an axial direction of the main shaft 41 or a recess recessed in an axial direction of the main shaft 41. Of the plurality of transmission gears 49 and the plurality of transmission gears 420, only selected one or more of the transmission gears 49 and 420 are engaged with each other. The engaging portions of the transmission gears 49 and the transmission gears 420 overlap with each other with respect to the axial direction of the main shaft 41, whereby the transmission gears 49 and the transmission gears 420 are engaged with each other. At least one of the transmission gears 49 other than the selected one of the transmission gears 49 and the transmission gears 420 other than the selected one of the transmission gears 420 is allowed to be rotatable relative to the main shaft 41 or the drive shaft 42. In other words, at least one of the non-selected transmission gears 49 and the non-selected transmission gears 420 is allowed to spin freely relative to the main shaft 41 or the drive shaft 42. That is, the transmission of rotation between the main shaft 41 and the drive shaft 42 is carried out only through the selected transmission gear 49 and the selected transmission gear 420 that mesh with each other.

The selection of the transmission gear 49 and the transmission gear 420 is performed by the shift drum 421. According to the rotation of the shift drum 421, the combination of the transmission gears 49 and 420 that engage with each other is changed. A plurality of cam grooves 421a are formed in the outer circumferential surface of the shift drum 421. A shift fork 422 is fitted to each of the cam grooves 421a. Each shift fork 422 engages with a predetermined transmission gear 49 of the main shaft 41 and a predetermined transmission gear 420 of the drive shaft 42. In response to rotation of the shift drum 421, each of the plurality of the shift forks 422 is guided by the cam grooves 421a to moves in an axial direction of the main shaft 41. Thereby, of the transmission gears 49 and 420, the gears to be engaged with each other are selected. More specifically, of the plurality of transmission gears 49 and the plurality of transmission gears 420, only the pair of gears that is located at the position corresponding to the rotation angle of the shift drum 421 is brought into a fixed state relative to the main shaft 41 and the drive shaft 42 by a spline. Thereby, the gear position in the transmission mechanism 43 is determined. As a result, the transmission of rotation is carried out between the main shaft 41 and the drive shaft 42 through the transmission gear 49 and the transmission gear 420 at a predetermined transmission gear ratio. The shift drum 421 is rotated only by a predetermined angle by a shift rod 75 moving back and forth.

Switching of the transmission gears of the transmission mechanism 43, in other words, change of the gear position of the transmission mechanism 43, is performed by actuation of the shift actuator 70 (See Fig. 3). In the present embodiment, the shift actuator 70 is an electric motor, but the shift actuator 70 is not limited to the electric motor. The shift actuator 70 is connected to the shift drum 421 via the shift rod 75. The shift actuator 70 changes the combination of the transmission gears 49 and 420 that engage with each other by rotating the shift drum 421. The shift rod 75 is driven by the shift actuator 70 to thereby move back and forth.

With such a configuration as described above, when the engine 45 is operated under the condition in which a predetermined pair of transmission gear 49 and transmission gear 420 are fixed respectively to the main shaft 41 and the drive shaft 42 and the clutch 44 is brought into an engaged state, the torque of the engine 45 is transmitted to the main shaft 41 via the clutch 44. Also, the transmission of rotation is carried out at a predetermined transmission gear ratio between the main shaft 41 and the drive shaft 42 via the predetermined pair of transmission gear 49 and transmission gear 420, so that the drive shaft 42 is rotated. When the drive shaft 42 is rotated, the torque is transmitted by a power transmission mechanism 47 (see Fig. 1) that connects the drive shaft 42 to a rear wheel 23 (see Fig. 1), so that the rear wheel 23 is rotated.

Fig. 3 is a block diagram showing main elements of the motorcycle 1. The motorcycle 1 has the engine 45, the clutch 44, and the transmission mechanism 43. As illustrated in Fig. 3a, an intake pipe 61 and an exhaust pipe 62 are connected to the engine 45. The engine 45 is provided with an ignition device 67. A throttle valve 65 is disposed in the intake pipe 61. The throttle valve 65 is a valve for adjusting the amount and speed of the air flowing through the intake pipe 61. An accelerator 63 for driving the throttle valve 65 is provided on the right handle bar of the motorcycle 1. A fuel supply system 66 for supplying fuel is provided on the intake pipe 61. The type of the fuel supply system 66 is not particularly limited. A fuel injection system, a carburetor, or the like may be suitably used for the fuel supply system 66.

Next, an automatic transmission apparatus 50 according to the present embodiment will be described below. As illustrated in Fig. 3, the automatic transmission apparatus 50 according to the present embodiment has the clutch 44, the transmission mechanism 43, the clutch actuator 60, and the shift actuator 70. The automatic transmission apparatus 50 also has an ECU (Electric Control Unit) 90 as a control device for controlling the clutch actuator 60 and the shift actuator 70. The ECU 90 controls not only the clutch actuator 60 and the shift actuator 70 but also the engine 45.

The automatic transmission apparatus 50 has a clutch actuator sensor S60 for detecting the driving amount of the clutch actuator 60 and a shift actuator sensor S70 for detecting the driving amount of the shift actuator 70. In the present embodiment, each of the clutch actuator 60 and the shift actuator 70 is made up of an electric motor. The clutch actuator sensor S60 is configured to detect the rotation angle of the clutch actuator 60, which is an electric motor. The shift actuator sensor S70 is configured to detect the rotation angle of the shift actuator 70, which is an electric motor. Hereinafter, the rotation angle may also be referred to as the "rotational position" or the "operating position". For example, a potentiometer can be used suitably for the clutch actuator sensor S60 and the shift actuator sensor S70. The shift actuator sensor S70 may either be a separate part from the shift actuator 70 or integrated with the shift actuator 70. One example of the shift actuator 70 and the shift actuator sensor S70 that are integrated with each other is a servomotor that is capable of detecting rotation angle. Similarly, the clutch actuator sensor S60 may either be a separate part from, or integrated with, the clutch actuator 60. It is also possible to use a servomotor as an integrated component of the clutch actuator 60 and the clutch actuator sensor S60.

Instead of providing the clutch actuator 60 and the shift actuator 70 separately, it is also possible to a single actuator for driving both the clutch 44 and the transmission mechanism 43. In this case, in place of the clutch actuator sensor S60 and the shift actuator sensor S70, it is possible to provide a single sensor for detecting the driving amount of the just-mentioned single actuator.

In addition, the automatic transmission apparatus 50 has a shift drum rotational speed sensor S421a, a shift drum rotational position sensor S421b, an engine rotational speed sensor S45, a throttle opening sensor S65, a gear shift position sensor S43, and a vehicle speed sensor S23. The shift drum rotational speed sensor S421a and the shift drum rotational position sensor S421b are provided on the shift drum 421 to detect the rotational speed of the shift drum 421 and the rotational position of the shift drum 421, respectively. The shift drum rotational speed sensor S421a and the shift drum rotational position sensor S421b are separate sensors, but it is also possible to use a sensor that can detect both the rotational speed and the rotational position of the shift drum 421. The engine rotational speed sensor S45 detects the rotational speed of the engine 45 (more specifically, the rotational speed of the crankshaft 25 of the engine 45). The throttle opening sensor S65 detects the degree of opening of the throttle valve 65. The gear shift position sensor S43 detects the gear shift position of the transmission mechanism 43. The vehicle speed sensor S23 detects the vehicle speed of the motorcycle 1. In the present embodiment, the vehicle speed sensor S23 is configured to detect the rotational speed of the rear wheel 23. The vehicle speed is detected based on the rotational speed of the rear wheel 23. However, the method of detecting the vehicle speed is not particularly limited.

The clutch actuator sensor S60 and the shift actuator sensor S70 are each connected to the ECU 90. The shift drum rotational speed sensor S421a, the shift drum rotational position sensor S421b, the engine rotational speed sensor S45, the throttle opening sensor S65, the gear shift position sensor S43, and the vehicle speed sensor S23 are also connected to the ECU 90. The ECU 90 receives signals from the clutch actuator sensor S60, the shift actuator sensor S70, the shift drum rotational speed sensor S421a, the shift drum rotational position sensor S421b, the engine rotational speed sensor S45, the throttle opening sensor S65, the gear shift position sensor S43, and the vehicle speed sensor S23. The ECU 90 is connected to the clutch actuator 60 and the shift actuator 70. The ECU 90 outputs a control signal to the clutch actuator 60 and the shift actuator 70.

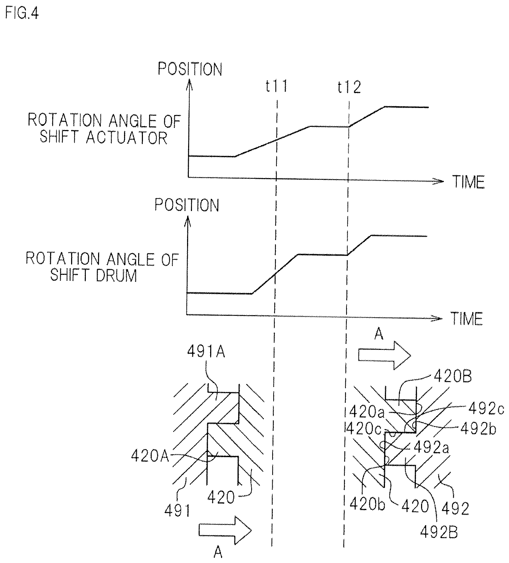

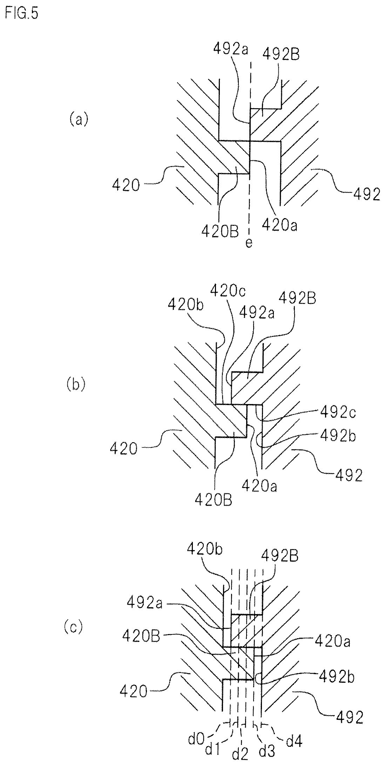

In the multi-speed type transmission mechanism 43 having a dog clutch, clunking noise may occur when the transmission gears 49 and 420 are engaged with each other. For example, the clunking noise occurs when the transmission gears 49 and 420 collide with each other. The automatic transmission apparatus 50 according to the present embodiment is one that suppresses unpleasant noise that occurs when the transmission gears 49 and 420 come into engagement with each other, when the multi-speed type transmission mechanism 43 having a dog clutch is driven by the shift actuator 70. Fig. 4 is a view schematically illustrating change in rotation angle of the shift actuator 70, change in rotation angle of the shift drum 421, as well as dog disengagement and dog engagement of the transmission gears. Fig. 5 schematically shows the positions of the transmission gears at the start of the dog engagement, in the middle of the dog engagement, and immediately before the completion of the dog engagement. Fig. 5(a) shows the positions of the gears at the start of the dog engagement, Fig. 5(b) shows the positions thereof in the middle of the dog engagement, and Fig. 5(c) shows the positions thereof immediately before the completion of the dog engagement. In the following description, it is assumed that the transmission gear 49 does not move but the transmission gear 420 moves. Among the transmission gears 49, one that has been engaged with the transmission gear 420 before gear shifting is referred to as a transmission gear 491. On the other hand, one that is to be engaged with the transmission gear 420 after gear shifting is referred to as a transmission gear 492. It should be noted, however, that a transmission gear with which the transmission gear 491 that has been engaged before gear shifting and a transmission gear with which the transmission gear 492 to be engaged after gear shifting may either be the same transmission gear (in this case, the transmission gear 420) or be different transmission gears. In the description of the present embodiment, it is assumed that the transmission gears 491 and 492 are in engagement with the same transmission gear before and after gear shifting. It should be noted that all the gaps between positions d0 to d4 in Fig. 5(c) are equal. Position d0 is the position of an end 492a of an engaging portion 492B of the transmission gear 492. Position d4 is the position of a bottom face 492b of the transmission gear 492.

As illustrated in Fig. 4, when the shift actuator 70 is actuated, the shift drum 421 starts to rotate. In response to rotation of the shift drum 421, the transmission gear 420 moves in a direction A. That is, the transmission gear 420 moves away from the transmission gear 491 which has been engaged with before gear shifting, and moves closer to the transmission gear 492 which is to be engaged with after gear shifting. Then, in the middle of the rotation of the shift drum 421 (see time t11), the engaging portion 420A that has slipped on the side face of the engaging portion 491A separates from the side face of the engaging portion 491A. That is, the transmission gear 420 separates from the transmission gear 491. The separation of the engaging portion 420A of the transmission gear 420 and the engaging portion 491A of the transmission gear 491, which have been engaged with each other before gear shifting, is referred to as "dog disengagement".

After the completion of the dog disengagement at time t11, the transmission gear 420 moves further in the direction A. Thereafter, the transmission gear 420 and the transmission gear 492 come into engagement with each other. That is, an engaging portion 420B of the transmission gear 420 and the engaging portion 492B of the transmission gear 492 are overlapped with each other. In other words, an end 420a of the engaging portion 420B of the transmission gear 420 moves rightward of the end 492a of the engaging portion 492B of the transmission gear 492. This is referred to as "dog engagement". Typically, the side face 420c of the engaging portion 420B and a side face 492c of the engaging portion 492B come into contact with each other. When the dog engagement is performed, clunking noise may occur. For example, clunking noise occurs because the end 420a of the engaging portion 420B of the transmission gear 420 collides with a bottom face 492b of the transmission gear 492. This clunking noise tends to become louder as the moving speed of the transmission gear 420 becomes higher. As illustrated in Fig. 5(a), in the present embodiment, the time at which the end face of the end 420a of the engaging portion 420B and the end face of the end 492a of the engaging portion 492B are located on a plane is referred to as "the start of the dog engagement". As illustrated in Fig. 4, the time at which the end 420a of the engaging portion 420B and the bottom face 492b of the transmission gear 492 are a location such as to be in contact with each other is referred to as the "completion of the dog engagement". However, the ECU 90 may control the end 420a of the engaging portion 420B and the bottom face 492b of the transmission gear 492 by the shift actuator 70 in such a manner that they do not come into contact with each other. In that case, the time at which the control of the dog engagement by the shift actuator 70 is completed is referred to as the "completion of the dog engagement". Also, the time in which the transmission gear 492 and the transmission gear 420 are in a positional relationship such as shown in Fig. 5(b), from the start of the dog engagement to the completion of the dog engagement, is referred to as "in the middle of the dog engagement". In addition, the time in which the transmission gears are from a predetermined position between the start of the dog engagement and the completion of the dog engagement to the position at the completion of the dog engagement is referred to as "immediately before the completion of the dog engagement". As illustrated in Fig. 5(c), the just-mentioned predetermined position is preferably a position at which the end 420a of the engaging portion 420B of the transmission gear 420 is closer to the transmission gear 492 than position d2 and is closer to the transmission gear 420 than position d4. More preferably, the just-mentioned predetermined position is a position at which the end 420a of the engaging portion 420B is closer to the transmission gear 492 than position d3 and is closer to the transmission gear 420 than position d4. It should be noted, however, that the time that is immediately before the completion of the dog engagement does not include the position of the completion of the dog engagement, that is, the time at which the end 420a of the engaging portion 420B is at position d4.

The automatic transmission apparatus 50 according to the present embodiment is capable of reducing the above-described clunking noise. As illustrated in Fig. 3, the ECU 90 has a speed detecting unit 92 for detecting a moving speed of the transmission gears 49 and 420, a position detecting unit 97 for detecting whether or not the position of the transmission gears 49 and 420 is the position for immediately before the completion of the dog engagement, a control determining unit 98 for determining which control process should be executed after the position detecting unit 97 has detected the position for immediately before the completion of the dog engagement, a braking control unit 94 for executing a braking control process immediately before the completion of the dog engagement, and a normal control unit 96 for executing a normal control process immediately before the completion of the dog engagement.

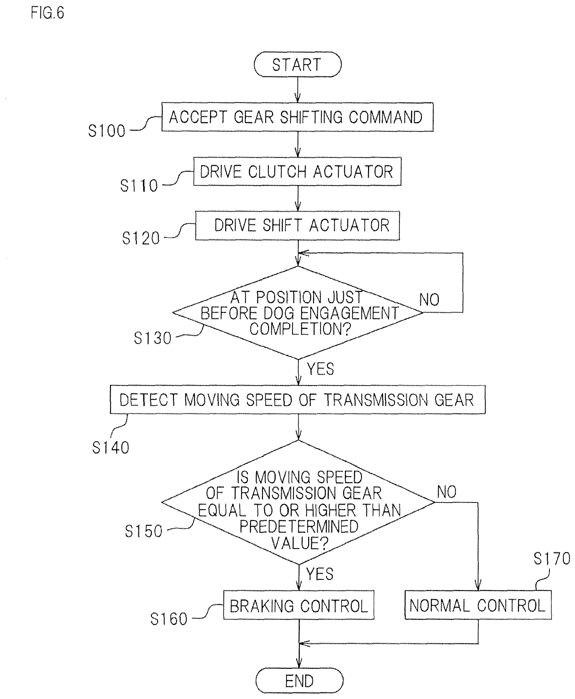

Next, the control process of the automatic transmission apparatus 50 according to the present embodiment will be described with reference to the flow-chart of Fig. 6. First, at step S100, the rider presses the shift-up switch or the shift-down switch, which are not shown in the drawings, and thereby the ECU 90 receives a gear shifting command signal.

Next, at step 110, the ECU 90 starts to disengage the clutch 44 by driving the clutch actuator 60. Then, without waiting for the completion of the disengagement of the clutch 44, the ECU 90 executes a gear shifting control process. At step S120, the ECU 90 allows the shift drum 421 to rotate by applying a voltage to the shift actuator 70, so as to perform the dog disengagement of the transmission gears 49 and 420 that have engaged with each other. After the completion of the dog disengagement of the transmission gears 49 and 420 before gear shifting, the engaging portions of the selected transmission gears 49 and 420 overlap with each other. In other words, the dog engagement of the transmission gears 49 and 420 is performed. In the present embodiment, the ECU 90 allows the shift actuator 70 to actuate without waiting for the completion of the disengagement of the clutch 44. However, the ECU 90 may allow the shift actuator 70 to actuate after the completion of disengagement of the clutch 44.

Next, at step S130, the ECU 90 determines whether or not the position of the transmission gears 49 and 420 is at the position for immediately before the completion of the dog engagement. The ECU 90 detects the operating position of the shift actuator 70 using the shift actuator sensor S70. Then, from the operating position of the shift actuator 70, the ECU 90 indirectly detects whether or not the position of the transmission gears 49 and 420 is at the position for immediately before the completion of the dog engagement. In the ECU 90, a predetermined position is set in advance for determining whether or not the position of the transmission gears 49 and 420 is at the position for immediately before the completion of the dog engagement. For example, the just-mentioned predetermined position is stored in a memory (not shown) within the ECU 90. The ECU 90 determines whether or not the transmission gears 49 and 420 are at the position for immediately before the completion of the dog engagement by comparing the operating position of the shift actuator 70 detected by the shift actuator sensor S70 with the just-mentioned predetermined position. If the operating position of the shift actuator 70 is equal to or further than the predetermined position, the ECU 90 determines that the transmission gears are at the position for immediately before the completion of the dog engagement. If the operating position of the shift actuator 70 is less than the predetermined position, the ECU 90 determines that the transmission gears do not yet reach the position for the completion of the dog engagement. If it is determined to be immediately before the completion of the dog engagement as a result of the determination at step S130, the process proceeds to step S140. On the other hand, if it is determined to be earlier than the time immediately before the completion of the dog engagement, the process of step S130 is executed again.

When the position of the transmission gears 49 and 420 is at a position immediately before the completion of the dog engagement, large clunking noise will occur if the moving speed of the transmission gears 49 and 420 is high, so braking is applied to the transmission gears 49 and 420. First, at step S140, the ECU 90 detects the moving speed of the transmission gears 49 and 420. The ECU 90 detects the operating speed of the shift actuator 70 using the shift actuator sensor S70. Then, the ECU 90 indirectly detects the moving speed of the transmission gears 49 and 420 from the operating speed of the shift actuator 70. Subsequently, at step S150, the ECU 90 determines whether the braking control process should be executed or the normal control process should be executed for the transmission gears 49 and 420. More specifically, in the ECU 90, a predetermined value of the moving speed of the transmission gears 49 and 420 is set in advance, for determining whether the braking control process should be executed or the normal control process should be executed. For example, the just-mentioned predetermined value is stored in a memory (not shown) within the ECU 90. Then, the ECU 90 compares the moving speed of the transmission gears 49 and 420 that has been detected at step S140 with the predetermined value. When the moving speed of the transmission gears 49 and 420 is equal to or greater than the predetermined value, the moving speed of the transmission gears 49 and 420 is high, so large clunking noise occurs. For this reason, the ECU 90 determines that the braking control process should be executed next. On the other hand, when the moving speed of the transmission gears 49 and 420 is less than the predetermined value, the moving speed of the transmission gears 49 and 420 is low, so the clunking noise is smaller than when the moving speed thereof is high. For this reason, the ECU 90 determines that the normal control process should be executed next. If it is determined that the braking control process should be executed as a result of the determination at step S150, the process proceeds to step S160. On the other hand, if it is determined that the normal control process should be executed, the process proceeds to step S170.

At step S160, the ECU 90 executes the braking control process to suppress the clunking noise at the time of the dog engagement. That is, the ECU 90 allows the shift drum 421 to rotate by applying a voltage to the shift actuator 70, to control the moving speed of the transmission gears 49 and 420 at the time of the dog engagement. More specifically, when the ECU 90 applies one of positive and negative voltages to the actuator to perform the dog disengagement at the time of a gear shifting operation of releasing a selected pair of transmission gears before the gear shifting from engagement with each other (i.e., performing the dog disengagement) and causing another pair of transmission gears that are to be selected next to engage with each other (performing the dog engagement), the ECU 90 performs the control process for immediately before the completion of the dog engagement by applying the other one of the voltages. In other words, the ECU 90 controls the moving speed of the transmission gears 49 and 420 for immediately before the completion of the dog engagement by applying, to the shift actuator 70, a voltage of the opposite sign to that was applied at the time of the dog disengagement (for example, by applying a negative voltage when a positive voltage has been applied at the time of the dog disengagement). Thus, the clunking noise at the time of the dog engagement is suppressed.

On the other hand, in step 170, the moving speed of the transmission gears 49 and 420 is low, the clunking noise is smaller than the above-described case where the moving speed is high. Accordingly, the ECU 90 executes the normal control process. That is, the ECU 90 allows the shift drum 421 to rotate by applying a voltage to the shift actuator 70, to control the moving speed of the transmission gears 49 and 420. More specifically, when the ECU 90 applies one of positive and negative voltages to the actuator to perform the dog disengagement at the time of a gear shifting operation of causing a dog disengagement for a selected pair of transmission gears and causing a dog engagement for another pair of transmission gears that are to be selected next, the ECU 90 performs the control process for immediately before the completion of the dog engagement by applying the just-mentioned one of the voltages. In other words, the ECU 90 controls the moving speed of the transmission gears 49 and 420 for immediately before the completion of the dog engagement by applying, to the shift actuator 70, a voltage of the same sign as that was applied at the time of the dog disengagement (for example, by applying a negative voltage when a positive voltage has been applied at the time of the dog disengagement). Thus, the braking control process and the normal control process are different in terms of the sign of the voltage applied to the shift actuator 70 immediately before the completion of the dog engagement.

When the braking control process at step S160 or the normal control process step S170 finishes, the control process of the automatic transmission apparatus 50 ends.

The ECU 90 functions as the position detecting unit 97 when executing the process of step S130 for detecting whether or not the position of the transmission gears 49 and 420 is the position for immediately before the completion of the dog engagement. The ECU 90 functions the speed detecting unit 92 (see Fig. 3) when executing the process of step S140. The ECU 90 functions the control determining unit 98 (see Fig. 3) when executing the process of step S150. In addition, the ECU 90 functions the braking control unit 94 (see Fig. 3) when executing the braking control process of step S160. The ECU 90 functions the normal control unit 96 (see Fig. 3) when executing the normal control process of step S170. The ECU 90 has the speed detecting unit 92 for detecting a moving speed of the transmission gears 49 and 420, the position detecting unit 97 for detecting whether or not the transmission gears 49 and 420 are at the position for immediately before the completion of the dog engagement, the control determining unit 98 for determining which control process should be executed after the position detecting unit 97 has detected the position for immediately before the completion of the dog engagement, the braking control unit 94 for executing the braking control process immediately before the completion of the dog engagement, and the normal control unit 96 for executing the normal control process immediately before the completion of the dog engagement. The shift actuator sensor S70 and the speed detecting unit 92 constitute a speed detecting device. The shift actuator sensor S70 and the position detecting unit 97 constitute a position detecting device.

In the present embodiment, the position detecting unit 97 detects whether or not the position of the transmission gears 49 and 420 are at the position for immediately before the completion of the dog engagement. However, the position detecting unit 97 may detect whether or not the engaging portions of the transmission gears 49 and 420 overlap with each other, in other words, whether or not the engaging portions of the transmission gears 49 and 420 are in the middle of the dog engagement. In this case, if the position of the transmission gears 49 and 420 is at the position in the middle of the dog engagement and the moving speed of the transmission gears 49 and 420 is high, the ECU 90 executes the braking control process to thereby control the moving speed of the transmission gears 49 and 420.

Next, one example of the automatic transmission apparatus (in particular, the braking control process) will be described in detail. The ECU 90 adjusts the application time of the voltage to be applied to the shift actuator 70 by performing duty control, to thereby control the moving speed of the transmission gears 49 and 420. The rotational speed of the shift drum 421 is adjusted by the just-mentioned adjustment. It should be noted that the duty control means a control process in which the duty ratio of the pulse wave for the shift actuator 70 is varied. The duty control is synonymous with a PWM (Pulse Width Modulation) control process. In addition, the ECU 90 determines the application time of the voltage to be applied to the shift actuator 70 in the braking control process of the braking control unit 94, based on the moving speed of the transmission gears 49 and 420 that is obtained immediately before the completion of the dog engagement. More specifically, the ECU 90 sets a longer application time for the negative voltage to be applied to the shift actuator 70 when the moving speed of the transmission gears 49 and 420 is higher. Thus, the higher the moving speed of the transmission gears 49 and 420, the greater the braking force applied to the shift drum 421. More specifically, the ECU 90 stores the relationship between the moving speed of the transmission gears 49 and 420 and the application time of the voltage to be applied to the shift actuator 70 in a map in advance. Then, the ECU 90 compares the moving speed of the transmission gears 49 and 420 detected by the speed detecting unit 92 with the just-mentioned map. The ECU 90 sets the application time of the voltage to be applied to the shift actuator 70 in the braking control process to be the application time corresponding to the just-mentioned moving speed. The relationship between the moving speed of the transmission gears 49 and 420 and the application time of the voltage to be applied to the shift actuator 70 may be stored in the memory (not shown) of the ECU 90 in a form other than the map, such as table, function formula, or the like. It may be defined in a control program to be executed by the ECU 90.

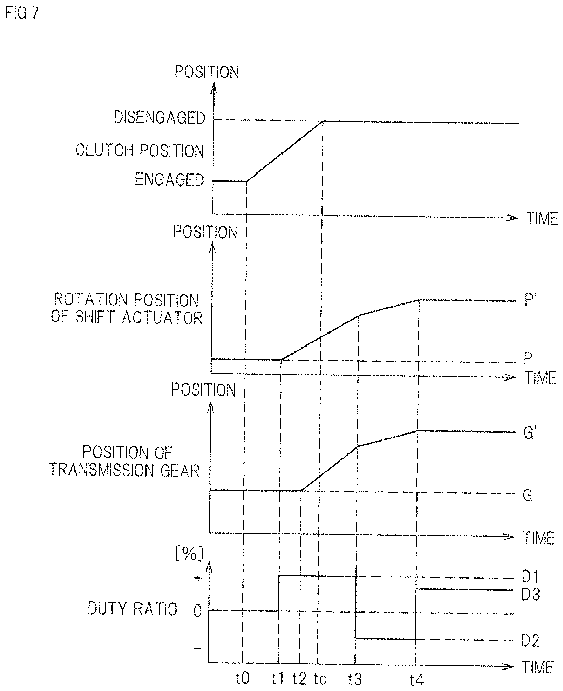

Fig. 7 are charts showing changes over time of the clutch position, the rotational position of the shift actuator, the position of the transmission gear (the one of the transmission gear 49 and the transmission gear 420 that needs to move), and the duty ratio, in one example of the automatic transmission apparatus. It should be noted that the shift drum 421 rotates in association with rotation of the shift actuator 70. Although not shown in Fig. 7, the rotational position of the shift drum 421 changes in a similar manner to the rotational position of the shift actuator 70.

As illustrated in Fig. 7, the ECU 90 receives a gear shifting command at time t0 (step S100 in Fig. 6), and immediately drives the clutch actuator 60 (step S110 in Fig. 6) to start to disengage the clutch 44. At this time, the duty ratio for the shift actuator 70 is 0%. Next, at time t1, which is later than time t0, the ECU 90 drives the shift actuator 70 with a first duty ratio D1 so that the rotational position of the shift actuator 70 changes from position P to position P' (step S120 in Fig. 6). When driving the shift actuator 70, the shift drum 421 (see Fig. 2) rotates, and the shift fork 422 (see Fig. 2) moves according to the rotation of the shift drum 421. According to the movement of the shift fork 422, the transmission gear moves. However, since there exists some margin in the mechanism from the shift actuator 70 to the transmission gear, the transmission gear does not start moving immediately. For this reason, at time t2, which is later than time t1, the transmission gear starts to move. The dog disengagement is performed immediately after time t2. In the present embodiment, the dog disengagement is performed during the time in which the clutch 44 is disengaged (time t0-time tc). The dog engagement is performed after the clutch 44 is disengaged (later than time tc).

After driving the shift actuator 70, the ECU 90 determines whether or not the position of the transmission gears is at the position for immediately before the completion of the dog engagement by the position detecting unit 97, as in step S130 show in Fig. 6. The time at which the ECU 90 sets the position of the transmission gears to the position for immediately before the completion of the dog engagement is time t3.

Then, at time t3, the ECU 90 detects the moving speed of the transmission gear by the speed detecting unit 92, as in step S140 shown in Fig. 6. The, as in step S150, the ECU 90 compares the moving speed of the transmission gear with the predetermined value of the moving speed of the transmission gear, which has been determined in advance for determining whether the braking control process should be executed or the normal control process should be executed. If the moving speed is equal to or greater than the predetermined value, the duty ratio is switched over from the duty ratio D1 to a duty ratio D2, as shown in Fig. 7 (step S160 in Fig. 6). Note that time t3 is the time immediately before the completion of the dog engagement of the transmission gears. However, time t3 may be a time at the start of the dog engagement or a time in the middle of the dog engagement. The duty ratio D1 is positive, and the duty ratio D2 is negative. By changing over the duty ratio D1 and the duty ratio D2 in this way, the direction in which the shift drum 421 is driven can be reversed. As a result, the shift drum 421 can be decelerated. The absolute values of the duty ratio D1 and the duty ratio D2 may be either the same or different.

At time t4, in other words, at the time when the rotational position of the shift actuator 70 has reached position P' and the position of the transmission gear has reached position G', the ECU 90 ends the control process for the shift actuator 70. After time t4, the ECU 90 drives the shift actuator 70 with a duty ratio D3. Although not shown in the drawings, the ECU 90 drives the clutch actuator 60 after the transmission gear has reached position G' to engage the clutch 44. Thereby, the control process is completed.

In the present embodiment, when executing the braking control process, the ECU 90 controls the rotational speed of the shift drum 421 by the duty control to adjust the rotational speed of the shift actuator 70. However, the method of controlling the shift actuator 70 is not limited to the duty control, but for example, the shift actuator 70 may be controlled by appropriately varying the voltage applied to the shift actuator 70 when executing the braking control process. More specifically, the ECU 90 stores the relationship between the moving speed of the transmission gears and the voltage value to be applied to the shift actuator 70 in a map in advance. Then, the ECU 90 compares the moving speed of the transmission gears detected by the speed detecting unit 92 with the just-mentioned map. The ECU 90 sets the voltage value to be applied to the shift actuator 70 in the braking control process to be the voltage value corresponding to the just-mentioned moving speed. The relationship between the moving speed of the transmission gears 49 and 420 and the voltage value to be applied to the shift actuator 70 may be stored in the memory (not shown) of the ECU 90 in a form other than the map, such as table, function formula, or the like. It may be defined in a control program to be executed by the ECU 90.

In the present embodiment, at the time of a gear shifting operation of releasing a pair of the transmission gears 49 and 420 from engagement with each other before the gear shifting (i.e., performing the dog disengagement) and causing another pair of the transmission gears 49 and 420 to engage with each other (performing the dog engagement), the ECU 90 releases the pair of the transmission gears 49 and 420 from engagement with each other by applying a positive voltage, as described above. Then, the ECU 90 executes a control process of applying a negative voltage by the braking control unit 94 before the engagement of the other pair of the transmission gears 49 and 420 is completed (i.e., immediately before the completion of the dog engagement). This enables to obtain a significant speed reduction effect on the shift drum 421 within a short time. As a result, the clunking noise at the time of the dog engagement can be reduced, while at the same time an increase in the gear shifting time due to the speed reduction can be prevented. Moreover, when the transmission gears 49 and 420 are moved with a great inertial force at the time of the dog engagement, a sufficient braking force can be provided for the transmission gears 49 and 420. As a result, the clunking noise at the time of the dog engagement can be reduced.

In the present embodiment, the braking control unit 94 determines the application time of the voltage to be applied to the shift actuator 70 immediately before the completion of the dog engagement based on the moving speed of the transmission gears 49 and 420. By determining the application time of the voltage to be applied to the shift actuator 70 according to the moving speed of the transmission gears in this way, the braking force can be adjusted. As a result, both the prevention of an increase in the gear shifting time resulting from the speed reduction and the reduction of the clunking noise at the time of the dog engagement can be achieved at a high level.

In the present embodiment, the speed detecting unit 92 indirectly detects the moving speed of the transmission gears 49 and 420 by detecting the operating speed of the shift actuator 70 using the shift actuator sensor S70. It is easier to indirectly detect the moving speed of the transmission gears 49 and 420 based on the operating speed of the shift actuator 70 than to directly detect the moving speed of the transmission gears 49 and 420. Thus, the moving speed of the transmission gears 49 and 420 can be detected easily.

In the present embodiment, the braking control unit 94 detects the position for immediately before the completion of the dog engagement of the transmission gears 49 and 420 by the position detecting unit 97 and thereafter applies a voltage with the opposite sign to the one applied at the time of the dog disengagement (i.e., a negative voltage in the present embodiment) to the shift actuator 70. With such a configuration, it is possible to prevent the braking from starting earlier than the start of the dog engagement of the transmission gears 49 and 420. This makes it possible to prevent the braking from starting too early. Moreover, an increase in the gear shifting time can be prevented. Furthermore, the above-described configuration allows the braking to take place immediately before the completion of the dog engagement of the transmission gears 49 and 420, and thereby prevents the braking from being delayed. In addition, by applying a negative voltage to the shift actuator 70, the clunking noise at the time of the dog engagement can be reduced more suitably.

In the present embodiment, the position detecting unit 97 indirectly detects the position for immediately before the completion of the dog engagement of the transmission gears 49 and 420 based on the operating position of the shift actuator 70. Thus, it is easier to indirectly detect the position for immediately before the completion of the dog engagement of the transmission gears 49 and 420 based on the operating position of the shift actuator 70 than to directly detect the position for immediately before the completion of the dog engagement.

In the present embodiment, the ECU 90 executes the control process of the braking control unit 94 if the moving speed of a pair of the transmission gears 49 and 420 immediately before the completion of the dog engagement is equal to or higher than a predetermined value. On the other hand, the ECU 90 executes the control process of the normal control unit 96 if the just-mentioned moving speed is less than the predetermined value. Such a configuration makes it possible to appropriately use whether or not the braking is effected, according to the moving speed of the transmission gears 49 and 420. When the moving speed of the transmission gears 49 and 420 is high, the transmission gears 49 and 420 can be sufficiently decelerated before the engagement of the transmission gears 49 and 420 with each other is completed. As a result, the clunking noise at the time of the dog engagement can be reduced, while at the same time an increase in the gear shifting time can be prevented. On the other hand, when the moving speed of the transmission gears 49 and 42 is low, large clunking noise does not occur at the time of the dog engagement. For this reason, the braking on the transmission gears 49 and 420 can be eliminated, whereby an increase in the gear shifting time can be avoided.

Thus, the motorcycle 1 according to the first embodiment has been described hereinabove. It should be noted that the straddle-type vehicle according to the present teaching is not limited to the motorcycle 1 of the present embodiment, but may be embodied in various other types of embodiments. Next, another embodiment will be described briefly.

### <SECOND EMBODIMENT>

In the first embodiment, the speed detecting unit 92 detects the operating speed of the shift actuator 70 using the shift actuator sensor S70. The moving speed of the transmission gears 49 and 420 is indirectly detected from the just-mentioned operating speed. The position detecting unit 97 detects the operating position of the shift actuator 70 using the shift actuator sensor S70. Then, the position for immediately before the completion of the dog engagement of the transmission gears 49 and 420 is indirectly detected from the just-mentioned operating position. However, the configurations of the speed detecting unit 92 and the position detecting unit 97 are not limited to the above-described configurations. It is also possible to employ a speed detecting unit 92 and a position detecting unit 97 according to a second embodiment, such as shown in the following.

Next, the second embodiment will be described. In the present embodiment, the same parts as in the first embodiment are designated by the same reference numerals and will not be further elaborated upon. The automatic transmission apparatus 50 according to the present embodiment has the shift drum rotational speed sensor S421a and the shift drum rotational position sensor S421b, as in the first embodiment. The shift drum rotational speed sensor S421a and the shift drum rotational position sensor S421b are provided on the shift drum 421. The shift drum rotational speed sensor S421a and the shift drum rotational position sensor S421b detect the rotational speed and rotational position of the shift drum 421, respectively. The speed detecting unit 92 indirectly detects the moving speed of the transmission gears 49 and 420 by detecting the rotational speed of the shift drum 421, which is driven by the shift actuator 70. The speed detecting unit 92 detects the rotational speed of the shift drum 421 using the shift drum rotational speed sensor S421a. Then, the speed detecting unit 92 detects the moving speed of the transmission gears 49 and 420 from the rotational speed of the shift drum 421. Note that in the present embodiment, the shift drum rotational speed sensor S421a and the speed detecting unit 92 constitute the speed detecting device.

The position detecting unit 97 according to the present embodiment indirectly detects the position for immediately before the completion of the dog engagement of the transmission gears 49 and 420 by detecting the rotational position of the shift drum 421, which is driven by the shift actuator 70. The speed detecting unit 97 detects the rotational position of the shift drum 421 using the shift drum rotational position sensor S421b. The position detecting unit 97 indirectly detects the position for immediately before the completion of the dog engagement of the transmission gears 49 and 420 based on the rotational position of the shift drum 421. In addition, a predetermined position to be compared with the rotational position of the shift drum 421 is stored in the position detecting unit 97 in advance, for determining the position for immediately before the completion of the dog engagement of the transmission gears 49 and 420. For example, the just-mentioned predetermined position is stored in a memory (not shown) within the ECU 90. The position detecting unit 97 determines whether or not the transmission gears 49 and 420 are at the position for immediately before the completion of the dog engagement by comparing the rotational position of the shift drum 421 detected by the shift drum rotational position sensor S421b with the just-mentioned predetermined position. The position detecting unit 97 determines that the position of the transmission gears 49 and 420 is at the position for immediately before the completion of the dog engagement if the rotational position of the shift drum 421 is equal to or further than the predetermined position. In the present embodiment, the position detecting unit 97 detects the position for immediately before the completion of the dog engagement, but it is possible that the position detecting unit 97 may detect a position at the start of the dog engagement or a position in the middle of the dog engagement. This enables the ECU 90 to effect the braking at a position at the start of the dog engagement or in the middle of the dog engagement and when the moving speed of the transmission gears 49 and 420 is high. Note that the shift drum rotational position sensor S421b and the position detecting unit 97 constitute the position detecting device.

In the present embodiment, the ECU 90 comprises the speed detecting unit 92 and the position detecting unit 97 with the above-described configuration. The control processes other than those of the speed detecting unit 92 and the position detecting unit 97 of the ECU 90 are the same as those in the first embodiment, and therefore the description thereof will be omitted.

Thus, according to the present embodiment, the speed detecting unit 92 indirectly detects the moving speed of the transmission gears 49 and 420 from the rotational speed of the shift drum 421. Accordingly, it is easier to indirectly detect the moving speed of the transmission gears 49 and 420 based on the rotational speed of the shift drum 421 than to directly detect the moving speed of the transmission gears 49 and 420. Thus, the moving speed of the transmission gears 49 and 420 can be detected easily. Moreover, the shift drum 421 is located closer to the transmission gears 49 and 420 than is the shift actuator 70. Therefore, the moving speed of the transmission gears 49 and 420 can be detected more accurately by detecting the rotational speed of the shift drum 421 than by detecting the operating speed of the shift actuator 70.

In the present embodiment, the position detecting unit 97 indirectly detects the position for immediately before the completion of the dog engagement of the transmission gears 49 and 420 based on the rotational position of the shift drum 421. Thus, it is easier to indirectly detect the dog engagement position of the transmission gears 49 and 420 based on the operating position of the shift drum 421 than to directly detect the position for immediately before the completion of the dog engagement of the transmission gears 49 and 420. As a result, the dog engagement position of the transmission gears 49 and 420 can be detected easily. Moreover, the shift drum 421 is located closer to the transmission gears 49 and 420 than is the shift actuator 70. Therefore, the overlap of the engaging portions of the transmission gears 49 and 420 with each other can be detected more accurately by detecting the rotational position of the shift drum 421 than by detecting the operating position of the shift actuator 70.

### <THIRD EMBODIMENT>

In the first and second embodiments, the position detecting unit 97 indirectly detects the position for immediately before the completion of the dog engagement of the transmission gears 49 and 420 by detecting the operating position of the shift actuator 70 or the rotational position of the shift drum 421. However, the configuration of the position detecting unit 97 is not limited to the above-described configuration. It is also possible to employ a position detecting unit 97 according to a third embodiment, as shown in the following.

Next, the third embodiment will be described. In the present embodiment, the same parts as in the first and second embodiments are designated by the same reference numerals and will not be further elaborated upon. The position detecting unit 97 according to the present embodiment detects the position for immediately before the completion of the dog engagement of the transmission gears 49 and 420 by detecting an elapsed time from the start of the operation of the shift actuator 70. In the position detecting unit 97, a predetermined time from the start of the operation of the shift actuator 70 is set in advance that serves as the reference for the position for immediately before the completion of the dog engagement of the transmission gears 49 and 420. For example, the just-mentioned predetermined time is stored in a memory (not shown) within the ECU 90. The position detecting unit 97 stores the position detecting unit 97 the operation starting time of the shift actuator 70. After the shift actuator 70 starts to operate, the position detecting unit 97 compares the elapsed time from the start of the operation of the shift actuator 70 with the above-mentioned predetermined time. The position detecting unit 97 determines that the position of the transmission gears 49 and 420 is at the position for immediately before the completion of the dog engagement if the elapsed time becomes equal to or longer than the above-mentioned predetermined time. Note that the predetermined time may be either a constant or a variable that changes according to the operating speed of the shift actuator 70. Nevertheless, when the predetermined time is a variable, the position for immediately before the completion of the dog engagement of the transmission gears 49 and 420 can be more appropriately detected than when it is a constant. When the predetermined time is set as a variable as described above, the position detecting unit 97 may detect the rotational speed of the shift actuator 70 using the shift actuator sensor S70 and set a predetermined time according to the rotational speed. The relationship between the rotational speed and the predetermined time may be stored in the memory (not shown) of the ECU 90 in a form of map, table, function formula, or the like. It may be defined in a control program to be executed by the ECU 90. In the present embodiment, the position detecting unit 97 detects the position for immediately before the completion of the dog engagement, but it is possible that the position detecting unit 97 may detect a position at the start of the dog engagement or a position in the middle of the dog engagement.

In the present embodiment, the ECU 90 comprises the position detecting unit 97with the above-described configuration. The control processes other than that of the position detecting unit 97 are the same as those in the first embodiment, and therefore the description thereof will be omitted.

As described above, according to the present embodiment, the position detecting unit 97 detects the elapsed time from the start of the operation of the shift actuator 70 and indirectly detects the position for immediately before the completion of the dog engagement of the transmission gears 49 and 420 from the just-mentioned elapsed time. Thus, it is easier to indirectly detect the position immediately before the completion of the dog engagement of the transmission gears 49 and 420 based on the elapsed time from the start of the operation of the shift actuator 70 than to directly detect the position for immediately before the completion of the dog engagement.

### < OTHER EMBODIMENTS >

In the foregoing embodiments, the speed detecting unit 92 of the speed detecting device indirectly detects the moving speed of the transmission gears 49 and 420 by detecting the operating speed of the shift actuator 70 or the rotational speed of the shift drum 421. However, the speed detecting device may be configured so that the speed detecting unit 92 directly detects the moving speed of the transmission gears 49 and 420.

In the foregoing embodiments, the position detecting unit 97 indirectly detects the position for immediately before the completion of the dog engagement of the transmission gears 49 and 420 by detecting the operating position of the shift actuator 70, the rotational position of the shift drum 421, or the elapsed time from the start of the operation of the shift actuator 70. However, the position detecting unit 97 may be configured so as to directly detect the position for immediately before the completion of the dog engagement of the transmission gears 49 and 420.

In the foregoing embodiments, as illustrated in Fig. 7, the ECU 90 allows the shift actuator 70 to operate at a constant speed from the start of the gear shifting control process (time t1) to the time immediately before the completion of the dog engagement of the transmission gears (time t3). However, the ECU 90 may drive the shift actuator 70 so that the rotational speed of the shift actuator 70 changes in a step-wise manner from the start of the gear shifting control process (time t1) to the time immediately before the completion of the dog engagement of the transmission gears (time t3).

In the foregoing embodiments, the ECU 90 applies braking on the shift actuator 70 when the moving speed of the transmission gears 49 and 420 is high in the middle of the dog engagement of the transmission gears 49 and 420 (typically, immediately before the dog engagement). However, the ECU 90 may apply braking on the shift actuator 70 before the dog engagement of the transmission gears 49 and 420, that is, before the engaging portions of the transmission gears 49 and 420 overlap each other.

In the foregoing embodiments, the rider manually operates the shift switch, which is not shown in the drawings, to send a shift position change command to the ECU 90. After the ECU 90 receives the shift position change command, the ECU 90 drives the clutch actuator 60 and the shift actuator 70. However, in the present teaching, it is also possible that the ECU 90 may automatically command the change of the shift position change and thereby drive the clutch actuator 60 and the shift actuator 70.

According to the foregoing embodiments, it is also disclosed a method for controlling an automatic transmission apparatus having a plurality of transmission gears 49,420 to engage with each other in association with rotation of a shift drum 421 and an electric actuator 70 for rotating the shift drum 421. Said method comprises the steps of: controlling the actuator 70 by applying a voltage thereto, executing a control process at the time of a gear shifting operation of releasing a pair of transmission gears 49,420 from engagement with each other and causing another pair of transmission gears 49,420 to engage with each other, the control process including applying one of positive and negative voltages to the actuator 70 to release the pair of transmission gears 49,420 from engagement with each other and thereafter applying the other one of the positive and negative voltages to the actuator 70 before the other pair of transmission gears 49,420 finish engaging with each other. Said method further comprises: directly or indirectly detecting a moving speed of the transmission gears 49,420, and determining an application time or a voltage value of the other one of the voltages based on the moving speed of the transmission gears 49,420. Said method further comprises: indirectly detects the moving speed of the transmission gear from the operating speed of the actuator 70, or indirectly detects the moving speed of the transmission gear from the rotational speed of the shift drum 421. In said method, the transmission gears 49,420 are brought into engagement with each other by overlapping engaging portions thereof with each other, and the method further comprises directly or indirectly detecting an overlap of the engaging portions with each other, and applying the other voltage to the actuator 70 if the detecting device detects the overlap. Said method further comprises: detecting an operating position of the actuator 70, and indirectly detecting the overlap of the engaging portions with each other from the operating position of the actuator 70, or detecting a rotational position of the shift drum 421, and indirectly detecting the overlap of the engaging portions with each other from the rotational position of the shift drum 421, or detecting an elapsed time from a start of operating the actuator 70, and indirectly detecting the overlap of the engaging portions with each other from the elapsed time. Said method further comprises: directly or indirectly detecting a moving speed of the transmission gears 49,420, and for executing a control process including applying one of positive and negative voltages to the actuator 70 to release the pair of transmission gears 49,420 from engagement with each other and thereafter keeping applying the one of positive and negative voltages to the actuator 70 until the other pair of transmission gears 49,420 finishes engaging with each other; and executing the control process if the moving speed of the transmission gear is equal to or higher than a predetermined value before the other pair of transmission gears 49,420 finishes engaging with each other, and executes the control process by the normal control unit if the moving speed is less than the predetermined value.

### REFERENCE SIGNS LIST

1 -- Motorcycle (straddle-type vehicle)
43-- Transmission mechanism
49-- Transmission gear
50 -- Automatic transmission apparatus
70 -- Shift actuator
90 -- ECU (control device)
92 -- Speed detecting unit
94 -- Braking control unit
96 -- Normal control unit
97 -- Position detecting unit
420 -- Transmission gear
421 -- Shift drum

## Claims

1. An automatic transmission apparatus comprising:
a multi-speed type transmission mechanism (43), having a plurality of transmission gears (49,420) to engage with each other via a dog clutch and changing a combination of the engaging transmission gears (49,420) in association with rotation of a shift drum (421);
an electric actuator (70) for rotating the shift drum (421); and
a control device (90) for controlling the actuator (70) by applying a voltage thereto, wherein
the control device (90) has a braking control unit (94) for executing a control process at the time of a gear shifting operation of releasing a pair of transmission gears (49,420) from engagement with each other and causing another pair of transmission gears (49,420) to engage with each other, the control process including applying one of positive and negative voltages to the actuator (70) to release the pair of transmission gears (49,420) from engagement with each other, **characterised by** that thereafter applying the other one of the positive and negative voltages to the actuator (70) before the other pair of transmission gears (49,420) finish engaging with each other.

2. An automatic transmission apparatus according to claim 1, further comprising:
a speed detecting device for directly or indirectly detecting a moving speed of the transmission gears (49,420), and wherein
the braking control unit (94) determines an application time or a voltage value of the other one of the voltages based on the moving speed of the transmission gears (49,420).

3. An automatic transmission apparatus according to claim 2, wherein the speed detecting device has a detecting unit (92) for detecting the operating speed of the actuator (70), and the speed detecting device indirectly detects the moving speed of the transmission gear from the operating speed of the actuator (70).

4. An automatic transmission apparatus according to claim 2, wherein the speed detecting device has a detecting unit (92) for detecting the rotational speed of the shift drum (421), and the speed detecting device indirectly detects the moving speed of the transmission gear from the rotational speed of the shift drum (421).

5. An automatic transmission apparatus according to at least one of the claims 1 to 4, wherein:
the transmission gears (49,420) are fitted to a main shaft;
the transmission gears (49,420) have engaging portions each comprising a protrusion protruding in an axial direction of the main shaft or a recess recessed in an axial direction of the main shaft;
the transmission gears (49,420) are brought into engagement with each other by overlapping the engaging portions with each other with respect to the axial direction;
the automatic transmission apparatus further comprises a detecting device for directly or indirectly detecting an overlap of the engaging portions with each other with respect to the axial direction; and
the braking control unit (94) applies the other voltage to the actuator (70) if the detecting device detects the overlap.

6. An automatic transmission apparatus according to claim 5, wherein the detecting device has a detecting unit (97) for detecting an operating position of the actuator (70), and the detecting device indirectly detects the overlap of the engaging portions with each other from the operating position of the actuator (70).

7. An automatic transmission apparatus according to claim 5, wherein the detecting device has a detecting unit (97) for detecting a rotational position of the shift drum (421), and the detecting device indirectly detects the overlap of the engaging portions with each other from the rotational position of the shift drum (421).

8. An automatic transmission apparatus according to claim 5, wherein the detecting device has a detecting unit (97) for detecting an elapsed time from a start of operating the actuator (70), and the detecting device indirectly detects the overlap of the engaging portions with each other from the elapsed time.

9. An automatic transmission apparatus according to at least one of the claims 1 to 8, further comprising:
a speed detecting device for directly or indirectly detecting a moving speed of the transmission gears (49,420), and wherein:
the control device (90) has a normal control unit (96) for executing a control process including applying one of positive and negative voltages to the actuator (70) to release the pair of transmission gears (49,420) from engagement with each other and thereafter keeping applying the one of positive and negative voltages to the actuator (70) until the other pair of transmission gears (49,420) finishes engaging with each other; and
the control device (90) executes the control process by the braking control unit (94) if the moving speed of the transmission gear is equal to or higher than a predetermined value before the other pair of transmission gears (49,420) finishes engaging with each other, and executes the control process by the normal control unit if the moving speed is less than the predetermined value.

10. A straddle-type vehicle comprising an automatic transmission apparatus according to at least one of the claims 1 to 9.

11. A method for controlling an automatic transmission apparatus having a plurality of transmission gears (49,420) to engage with each other in association with rotation of a shift drum (421) and an electric actuator (70) for rotating the shift drum (421) comprising the steps of
controlling the actuator (70) by applying a voltage thereto,
executing a control process at the time of a gear shifting operation of releasing a pair of transmission gears (49,420) from engagement with each other and causing another pair of transmission gears (49,420) to engage with each other, the control process including applying one of positive and negative voltages to the actuator (70) to release the pair of transmission gears (49,420) from engagement with each other, **characterised by** that thereafter applying the other one of the positive and negative voltages to the actuator (70) before the other pair of transmission gears (49,420) finish engaging with each other.

12. A method for controlling an automatic transmission apparatus according to claim 11, further comprising:
directly or indirectly detecting a moving speed of the transmission gears (49,420), and determining an application time or a voltage value of the other one of the voltages based on the moving speed of the transmission gears (49,420).

13. A method for controlling an automatic transmission according to claim 12, further comprising: indirectly detects the moving speed of the transmission gear from the operating speed of the actuator (70), or
indirectly detects the moving speed of the transmission gear from the rotational speed of the shift drum (421).

14. A method for controlling an automatic transmission according to at least one of the claims 11 to 13, wherein the transmission gears (49,420) are brought into engagement with each other by overlapping engaging portions thereof with each other, the method further comprises directly or indirectly detecting an overlap of the engaging portions with each other, and applying the other voltage to the actuator (70) if the detecting device detects the overlap.

15. A method for controlling an automatic transmission according to claim 14, further comprising:
detecting an operating position of the actuator (70), and indirectly detecting the overlap of the engaging portions with each other from the operating position of the actuator (70), or
detecting a rotational position of the shift drum (421), and indirectly detecting the overlap of the engaging portions with each other from the rotational position of the shift drum (421), or
detecting an elapsed time from a start of operating the actuator (70), and indirectly detecting the overlap of the engaging portions with each other from the elapsed time.

## Patentansprüche

1. Ein Automatik-Getriebe-Gerät, das umfasst:
einen Mehr-Stufen-Typ-Getriebe-Mechanismus (43), der eine Mehrzahl von Getriebe-Zahnrädern (49, 420) hat um über eine Klauen-Kupplung miteinander einzugreifen und eine Kombination der eingegriffenen Getriebe-Zahnräder (49, 420) in Zuordnung zu Drehung einer Schalt-Trommel (421) zu ändern;
einen Elektro-Aktuator (70), zum Drehen der Schalt-Trommel (421); und
eine Steuervorrichtung (90), zum Steuern des Aktuators (70) durch Aufbringen einer Spannung auf diesen, wobei
die Steuervorrichtung (90) eine Brems-Steuereinheit (94) hat, zum Ausführen eines Steuer-Prozesses zum Zeitpunkt einer Gang-Wechsel-Betätigung des Lösens eines Paars von Getriebe-Zahnrädern (49, 420) vom Eingriff miteinander und Bewirken eines anderen Paars von Getriebe-Zahnrädern (49, 420) zum Eingriff miteinander, der Steuer-Prozess beinhaltet Aufbringen von einer von einer positiven oder negativen Spannung auf den Aktuator (70) um das Paar von Getriebe-Zahnrädern (49, 420) vom Eingriff miteinander zu lösen, **gekennzeichnet dadurch, dass** nachfolgend Aufbringen der anderen von der positiven und negativen Spannung auf den Aktuator (70) bevor das andere Paar von Getriebe-Zahnrädern (49, 420) den Eingriff miteinander beenden.

2. Ein Automatik-Getriebe-Gerät gemäß Anspruch 1, das weiter umfasst:
eine Geschwindigkeits-Erfassungsvorrichtung, zum direkten oder indirekten Erfassen einer Bewegungs-Geschwindigkeit der Getriebe-Zahnräder (49, 420), und wobei die Brems-Steuereinheit (94) eine Anwendungs-Zeit oder einen Spannungs-Wert von der anderen von den Spannungen aufgrund der Bewegungs-Geschwindigkeit der Getriebe-Zahnräder (49, 420) erfasst.

3. Ein Automatik-Getriebe-Gerät gemäß Anspruch 2, wobei die Geschwindigkeits-Erfassungsvorrichtung eine Erfassungseinheit (92) hat, zum Erfassen der Betätigungs-Geschwindigkeit des Aktuators (70), und die Geschwindigkeits-Erfassungsvorrichtung indirekt die Bewegungs-Geschwindigkeit der Getriebe-Zahnräder von der Betätigungs-Geschwindigkeit des Aktuators (70) erfasst.

4. Ein Automatik-Getriebe-Gerät gemäß Anspruch 2, wobei die Geschwindigkeits-Erfassungsvorrichtung eine Erfassungseinheit (92) hat, zum Erfassen der Dreh-Geschwindigkeit der Schalt-Trommel (421), und die Geschwindigkeits-Erfassungsvorrichtung indirekt die Bewegungs-Geschwindigkeit des Getriebe-Zahnrads von der Dreh-Geschwindigkeit der Schalt-Trommel (421) erfasst.

5. Ein Automatik-Getriebe-Gerät gemäß zumindest einem der Ansprüche 1 bis 4, wobei:
die Getriebe-Zahnräder (49, 420) auf eine Haupt-Welle gesetzt sind;
die Getriebe-Zahnräder (49, 420) haben Eingriffsabschnitte die jede einen Vorsprung, der in eine Axial-Richtung der Haupt-Welle vorsteht, oder eine Ausnehmung, die in einer Axial-Richtung der Haupt-Welle ausgenommen sind, umfassen;
die Getriebe-Zahnräder (49, 420) sind durch Überlappen der Eingriffsabschnitte miteinander mit Bezug auf die Axial-Richtung in Eingriff miteinander gebracht;
das Automatik-Getriebe-Gerät umfasst weiterhin eine Erfassungsvorrichtung zum direkten oder indirekten Erfassung einer Überlappung der Eingriffsabschnitte miteinander mit Bezug auf die Axial-Richtung; und
die Brems-Steuereinheit (94) führt die andere Spannung auf den Aktuator (70) aus wenn die Erfassungseinrichtung die Überlappung erfasst.

6. Ein Automatik-Getriebe-Gerät gemäß Anspruch 5, wobei die Erfassungsvorrichtung eine Erfassungseinheit (97) hat, zum Erfassen einer Betätigungs-Position des Aktuators (70), und die Erfassungsvorrichtung indirekt die Überlappung der Eingriffsabschnitte miteinander von der Betätigungs-Position des Aktuators (70) erfasst.

7. Ein Automatik-Getriebe-Gerät gemäß Anspruch 5, wobei die Erfassungsvorrichtung eine Erfassungseinheit (97) hat, zum Erfassen einer Dreh-Position der Schalt-Trommel (421), und die Erfassungsvorrichtung indirekt die Überlappung der Eingriffsabschnitte miteinander von der Dreh-Position der Schalt-Trommel (421) erfasst.

8. Ein Automatik-Getriebe-Gerät gemäß Anspruch 5, wobei die Erfassungsvorrichtung eine Erfassungseinheit (97) hat, zum Erfassen einer verstrichenen Zeit von einem Beginn der Betätigung des Aktuators (70), und die Erfassungsvorrichtung indirekt die Überlappung der Eingriffsabschnitte miteinander von der verstrichenen Zeit erfasst.

9. Ein Automatik-Getriebe-Gerät gemäß zumindest einem der Ansprüche 1 bis 8, das weiter umfasst:
eine Geschwindigkeits-Erfassungsvorrichtung, zum direkten oder indirekten Erfassung einer Bewegungs-Geschwindigkeit der Getriebe-Zahnräder (490, 420), und wobei:
Die Steuervorrichtung (90) eine Normal-Steuereinheit (96) hat, zum Ausführen eines Steuer-Prozesses der Aufbringen einer von positiver oder negativer Spannung auf den Aktuator (70), um das Paar von Getriebe-Zahnrädern (49, 420) vom Eingriff miteinander zu lösen, und danach das Aufbringen der einen von positiven und negativen Spannung auf den Aktuator (70) behält bis das andere Paar von Getriebe-Zahnrädern (49, 420) Eingriff miteinander beendet; und
die Steuervorrichtung (90) führt den Steuer-Prozess durch die Brems-Steuereinheit (94) aus wenn die Bewegungs-Geschwindigkeit des Getriebe-Zahnrads gleich oder höher ist als ein vorgegebener Wert bevor das andere Paar von Getriebe-Zahnrädern (49, 420) Eingriff miteinander beendet, und führt den Steuer-Prozess durch die Normal-Steuereinheit aus wenn die Bewegungs-Geschwindigkeit weniger als der vorgegebene Wert ist.

10. Ein Spreiz-Sitz-Typ-Fahrzeug das ein Automatik-Getriebe-Gerät gemäß zumindest einem der Ansprüche 1 bis 9 umfasst.

11. Ein Verfahren zur Steuerung eines Automatik-Getriebe-Geräts, das eine Mehrzahl von Getriebe-Zahnrädern (49, 420), um miteinander einzugreifen in Zuordnung zu Drehung einer Schalt-Trommel (421), und einen Elektro-Aktuator (70), zum Drehen der Schalt-Trommel (421), hat, umfasst die Schritte
Steuern des Aktuators (70) durch Aufbringen einer Spannung auf diesen,
Ausführen eines Steuer-Prozesses zum Zeitpunkt einer Gang-Wechsel-Betätigung des Lösens eines Paars von Getriebe-Zahnrädern (49, 420) vom Eingriff miteinander und Bewirken eines anderen Paars von Getriebe-Zahnrädern (49, 420) zum Eingriff miteinander, der Steuer-Prozess beinhaltet Aufbringen von einer von einer positiven oder negativen Spannung auf den Aktuator (70) um das Paar von Getriebe-Zahnrädern (49, 420) vom Eingriff miteinander zu lösen, **gekennzeichnet dadurch, dass** nachfolgend Aufbringen der anderen von der positiven und negativen Spannung auf den Aktuator (70) bevor das andere Paar von Getriebe-Zahnrädern (49, 420) den Eingriff miteinander beenden.

12. Ein Verfahren zur Steuerung eines Automatik-Getriebe-Geräts gemäß Anspruch 11, das weiter umfasst:
direktes oder indirektes Erfassen einer Bewegungs-Geschwindigkeit der Getriebe-Zahnräder (49, 420), und Erfassen einer Anwendungs-Zeit oder eines Spannungs-Wert von der anderen von den Spannungen aufgrund der Bewegungs-Geschwindigkeit der Getriebe-Zahnräder (49, 420).

13. Ein Verfahren zur Steuerung eines Automatik-Getriebe-Geräts gemäß Anspruch 12, das weiter umfasst: indirektes Erfassen der Bewegungs-Geschwindigkeit der Getriebe-Zahnräder von der Betätigungs-Geschwindigkeit des Aktuators (70), oder indirektes Erfassen der Bewegungs-Geschwindigkeit des Getriebe-Zahnrads von der Dreh-Geschwindigkeit der Schalt-Trommel (421).

14. Ein Verfahren zur Steuerung eines Automatik-Getriebe-Geräts gemäß zumindest einem der Ansprüche 11 bis 13, wobei die Getriebe-Zahnräder (49, 420) durch Überlappen der Eingriffsabschnitte miteinander mit Bezug auf die Axial-Richtung in Eingriff miteinander gebracht sind, das Verfahren umfasst weiter direktes oder indirektes Erfassung einer Überlappung der Eingriffsabschnitte miteinander mit Bezug auf die Axial-Richtung, und Aufbringen der andere Spannung auf den Aktuator (70) wenn die Überlappung erfasst ist.

15. Ein Verfahren zur Steuerung eines Automatik-Getriebe-Geräts gemäß Anspruch 14, das weiter umfasst:
Erfassen einer Betätigungs-Position des Aktuators (70), und indirekt Erfassung der Überlappung der Eingriffsabschnitte miteinander von der Betätigungs-Position des Aktuators (70), oder
Erfassen einer Dreh-Position der Schalt-Trommel (421), und indirekte Erfassung der Überlappung der Eingriffsabschnitte miteinander von der Dreh-Position der Schalt-Trommel (421), oder
Erfassen einer verstrichenen Zeit von einem Beginn der Betätigung des Aktuators (70), und indirekte Erfassung der Überlappung der Eingriffsabschnitte miteinander von der verstrichenen Zeit.

## Revendications

1. Appareil de transmission automatique comportant :
un mécanisme de transmission à vitesses multiples (43) ayant une pluralité d'engrenages de transmission (49, 420) destinés à être mis en prise les uns avec les autres par l'intermédiaire d'un embrayage à griffes et pour modifier une combinaison des engrenages de transmission (49, 420) en prise par la rotation d'un tambour de changement de vitesse (421) ;
un actionneur électrique (70) pour faire tourner le tambour de changement de vitesse (421) ; et
un dispositif de commande (90) pour commander l'actionneur (70) en y appliquant une tension, où
le dispositif de commande (90) comporte une unité de commande de freinage (94) pour exécuter un processus de commande lors d'une opération de changement de vitesse consistant à débrayer une paire d'engrenages de transmission (49, 420) et embrayer une autre paire d'engrenages de transmission (49, 420), le processus de commande comprenant l'application d'une tension positive ou négative à l'actionneur (70) pour débrayer la paire d'engrenages de transmission (49, 420), **caractérisé par** l'application ultérieure de l'autre des tensions positive ou négative à l'actionneur (70) avant la fin de l'embrayage de l'autre paire d'engrenages de transmission (49, 420).

2. Appareil de transmission automatique selon la revendication 1, comportant en outre : un dispositif de détection de vitesse pour détecter directement ou indirectement une vitesse de mouvement des engrenages de transmission (49, 420), et où
l'unité de commande de freinage (94) détermine un temps d'application ou une valeur de tension de l'autre des tensions en se fondant sur la vitesse de mouvement des engrenages de transmission (49, 420).

3. Appareil de transmission automatique selon la revendication 2, dans lequel le dispositif de détection de vitesse présente une unité de détection (92) pour détecter la vitesse de fonctionnement de l'actionneur (70), et le dispositif de détection de vitesse détecte la vitesse de mouvement de l'engrenage de transmission indirectement à partir de la vitesse de fonctionnement de l'actionneur (70).

4. Appareil de transmission automatique selon la revendication 2, dans lequel le dispositif de détection de vitesse présente une unité de détection (92) pour détecter la vitesse de rotation du tambour de changement de vitesse (421), et le dispositif de détection de vitesse détecte la vitesse de mouvement de l'engrenage de transmission indirectement à partir de la vitesse de rotation du tambour de changement de vitesse (421).

5. Appareil de transmission automatique selon au moins une des revendications 1 à 4, dans lequel :
les engrenages de transmission (49, 420) sont fixés sur un arbre principal ;
les engrenages de transmission (49, 420) présentent des parties d'engagement comprenant chacune une saillie faisant saillie dans une direction axiale de l'arbre principal ou un renfoncement orienté dans une direction axiale de l'arbre principal ;
les engrenages de transmission (49, 420) sont mis en prise les uns avec les autres en superposant les parties d'engagement les unes aux autres par rapport à la direction axiale ;
l'appareil de transmission automatique comporte en outre un dispositif de détection pour détecter directement ou indirectement une superposition des parties d'engagement par rapport à la direction axiale ; et
l'unité de commande de freinage (94) applique l'autre tension à l'actionneur (70) si le dispositif de détection détecte la superposition.

6. Appareil de transmission automatique selon la revendication 5, dans lequel le dispositif de détection présente une unité de détection (97) pour détecter une position de fonctionnement de l'actionneur (70), et le dispositif de détection détecte la superposition des parties d'engagement indirectement à partir de la position de fonctionnement de l'actionneur (70).

7. Appareil de transmission automatique selon la revendication 5, dans lequel le dispositif de détection présente une unité de détection (97) pour détecter une position de rotation du tambour de changement de vitesse (421), et le dispositif de détection détecte la superposition des parties d'engagement indirectement à partir de la position de rotation du tambour de changement de vitesse (421).

8. Appareil de transmission automatique selon la revendication 5, dans lequel le dispositif de détection présente une unité de détection (97) pour détecter un temps écoulé depuis le début d'un actionnement de l'actionneur (70), et le dispositif de détection détecte la superposition des parties d'engagement indirectement à partir du temps écoulé.

9. Appareil de transmission automatique selon au moins une des revendications 1 à 8, comportant en outre :
un dispositif de détection de vitesse pour détecter directement ou indirectement une vitesse de mouvement des engrenages de transmission (49, 420), et dans lequel :
le dispositif de commande (90) présente une unité de commande normale (96) pour effectuer un processus de commande comprenant l'application d'une tension positive ou négative à l'actionneur (70) pour débrayer la paire d'engrenages de transmission (49, 420) puis maintenir l'application de la tension positive ou négative à l'actionneur (70) jusqu'à la fin de l'embrayage de l'autre paire d'engrenages de transmission (49, 420) ; et
le dispositif de commande (90) exécute le processus de commande au moyen de l'unité de commande de freinage (94) si la vitesse de mouvement de l'engrenage de transmission est égale ou supérieure à une valeur prédéterminée avant la fin de l'embrayage de l'autre paire d'engrenages de transmission (49, 420), et exécute le processus de commande au moyen de l'unité de commande normale si la vitesse de mouvement est inférieure à la valeur prédéterminée.

10. Véhicule à enfourcher comportant un appareil de transmission automatique selon au moins une des revendications 1 à 9.

11. Procédé de commande d'un appareil de transmission automatique ayant une pluralité d'engrenages de transmission (49, 420) destinés à être mis en prise les uns avec les autres en lien avec la rotation d'un tambour de changement de vitesse (421) et un actionneur électrique (70) pour faire tourner le tambour de changement de vitesse (421) comportant les étapes consistant à
commander l'actionneur (70) en lui appliquant une tension
effectuer un processus de commande lors d'une opération de changement de vitesse consistant à débrayer une paire d'engrenages de transmission (49, 420) et embrayer une autre paire d'engrenages de transmission (49, 420), le processus de commande comprenant l'application d'une tension positive ou négative à l'actionneur (70) pour débrayer la paire d'engrenages de transmission (49, 420), **caractérisé par** l'application ultérieure de l'autre des tensions positive ou négative à l'actionneur (70) avant la fin de l'embrayage de l'autre paire d'engrenages de transmission (49, 420).

12. Procédé de commande d'un appareil de transmission automatique selon la revendication 11, comportant en outre :
la détection directe ou indirecte d'une vitesse de mouvement des engrenages de transmission (49, 420), et la détermination d'un temps d'application ou d'une valeur de tension de l'autre des tensions en se fondant sur la vitesse de mouvement des engrenages de transmission (49, 420).

13. Procédé de commande d'un appareil de transmission automatique selon la revendication 12, comportant en outre
la détection indirecte de la vitesse de mouvement de l'engrenage de transmission à partir de la vitesse de fonctionnement de l'actionneur (70), ou
la détection indirecte de la vitesse de mouvement de l'engrenage de transmission à partir de la vitesse de rotation du tambour de changement de vitesse (421).

14. Procédé de commande d'un appareil de transmission automatique selon au moins une des revendications 11 à 13, où les engrenages de transmission (49, 420) sont mis en prise les uns avec les autres en superposant leurs parties d'engagement les unes aux autres, le procédé comportant en outre la détection directe ou indirecte d'une superposition des parties d'engagement, et l'application de l'autre tension à l'actionneur (70) si le dispositif de détection détecte la superposition.

15. Procédé de commande d'un appareil de transmission automatique selon la revendication 14, comportant en outre
la détection d'une position d'actionnement de l'actionneur (70) et la détection indirecte de la superposition des parties d'engagement à partir de la position d'actionnement de l'actionneur (70), ou
la détection d'une position de rotation du tambour de changement de vitesse (421), et la détection indirecte de la superposition des parties d'engagement à partir de la position de rotation du tambour de changement de vitesse (421), ou
la détection d'un temps écoulé depuis un début de l'actionnement de l'actionneur (70), et la détection indirecte de la superposition des parties d'engagement à partir du temps écoulé.
